# FASCICULE DE BREVET EUROPEEN

(11) **EP 2 725 672 B1**
(45) Date de publication et mention de la délivrance du brevet: **25.05.2016**
(21) Numéro de dépôt: 13306387.5
(22) Date de dépôt: 07.10.2013
(51) Int. Cl.: H02H 1/00, H02H 3/02

(54) **Communication sans câblage dédié à partir d'un circuit surveillé pour l'action sur un sectionneur amont**
Kabellose Kommunikation über einen überwachten Schaltkreis zur Einwirkung auf einen vorgeschalteten Trennschalter
Communication without dedicated wiring from a monitored circuit for actuating an upstream switch

(30) Priorité: 26.10.2012 FR 1260256
(43) Date de publication de la demande: 30.04.2014
(73) Titulaire: Hager-Electro SAS (Société par Actions Simplifiée), 67210 Obernai (FR)
(72) Inventeur: Kalischek, Nicolas, 67210 Bernardswiller (FR)
(74) Mandataire: Nuss, Laurent

(56) Documents cités:
- EP-A1- 1 667 304
- WO-A1-2013/188229
- WO-A2-2007/092151
- GB-A- 1 470 692
- US-A- 3 460 042

## Description

Le domaine de la présente invention est celui des installations électriques pour le bâtiment, notamment des équipements de sécurité pour le bâtiment. L'invention a plus particulièrement pour objet des appareils électriques aptes à communiquer l'un avec l'autre, un équipement électrique comprenant une telle paire d'appareil électrique, ainsi qu'un procédé de mise en oeuvre d'un tel équipement électrique.

La sécurité électrique des bâtiments pourvus d'installations électriques est généralement assurée, entre autres, par des disjoncteurs de surcharge, ouvrant une circulation électrique dès que le courant est supérieur à un seuil, ou aussi par des disjoncteurs différentiels, ouvrant une circulation électrique dès l'apparition d'un déséquilibre, généralement sous forme de défaut de neutre détecté par une fuite à la terre. Le sectionneur peut aussi être sensible à la température et déclencher en cas de surchauffe.

L'installation électrique de puissance d'un bâtiment étant généralement structurée sous la forme d'une ramification plus ou moins complexe, les appareils de protection susvisés surveillent généralement une sous partie de la dite installation, notamment afin de réduire leur nombre, mais aussi pour éviter les câblages complexes.

Une des pistes parfois utilisée pour la sécurité des bâtiments consiste à réutiliser les sectionneurs existants, en provoquant leur ouverture dès lors qu'apparaissent des situations prédéfinies.

Ainsi, EP 2 180 569 propose un appareil visant à créer le déclenchement d'un disjoncteur différentiel, par la création d'un champ magnétique agissant sur sa serrure, dès lors qu'une surtension est détectée. L'équipement est donc câblé à au moins deux lignes de courant d'un circuit surveillé, comprend un moyen de mesure de tension ainsi qu'un générateur de champ magnétique. Néanmoins, dans de telles réalisations, et dès lors qu'il est souhaité d'en utiliser à divers endroits éloignés du disjoncteur différentiel, il est nécessaire de modifier l'installation électrique, en tirant des câbles soit entre les lignes surveillées et le moyen de mesure de la tension s'il se trouve à proximité du disjoncteur différentiel, soit entre le moyen de mesure de la tension et le générateur de champ magnétique s'il se trouve à proximité du circuit surveillé. Il est donc très peu commode de mettre en place de tels équipements à différents endroits du bâtiment. En outre, compte tenu de l'utilisation d'un effet magnétique, il est nécessaire de rajouter un composant dans l'environnement proche du disjoncteur différentiel, pouvant perturber d'autres appareils, compte tenu du champ magnétique.

WO 2009/040554, propose un équipement créant un déséquilibre, détecté par un disjoncteur différentiel, en fermant une dérivation d'une des lignes surveillées par ce dernier, dès lors qu'un détecteur, du type détecteur de fumée, envoie un signal d'alarme. L'inconvénient de ce type d'équipement est qu'il est impossible de détecter un problème électrique avant le déclenchement d'un incendie, mais aussi que l'installation électrique doit être modifiée de façon à réaliser un câblage entre le détecteur de fumée et le dispositif créant une dérivation du disjoncteur différentiel, généralement placé dans l'environnement immédiat du disjoncteur, pour éviter que la dérivation ne représente elle aussi un câblage compliqué à mettre en place.

FR 2 516 305 propose de provoquer l'ouverture des contacts d'un disjoncteur différentiel, en provoquant directement un courant identique à celui qui est créé lorsqu'un déséquilibre est détecté, afin de faire déclencher le disjoncteur différentiel dès que le courant circulant dans les lignes surveillées dépasse un seuil défini, notamment par l'abonnement de puissance maximale fournie. L'inconvénient d'un tel dispositif est qu'il est là aussi nécessaire de modifier le câblage de l'installation et de rajouter des conducteurs capables d'envoyer un courant jusqu'au tore de détection de déséquilibre du disjoncteur. Cela nécessite aussi de changer le disjoncteur différentiel. En outre, seule un dépassement d'ampérage peut amener à un déclenchement du disjoncteur différentiel.

Le document WO 2007/092151 A2 divulgue un système de distribution d'énergie électrique comprenant des dispositifs de protection contre les défauts. Lorsqu'un défaut est détecté dans l'un des dispositifs de protection, ledit dispositif de protection communique cette détection par radiofréquence à un dispositif de protection adjacent afin de piloter celui-ci.

Le document WO 2013/188229 A1, cité au titre de l'article 54(3) CBE, divulgue un disjoncteur communicant par radiofréquence la détection d'un défaut à un module de surveillance d'un circuit électrique.

La présente invention a pour but de pallier au moins une partie et préférentiellement tous ces inconvénients, et a ainsi notamment pour objectif de pouvoir stopper la transmission d'électricité dès lors qu'une situation prédéfinie, qui peut représenter un risque électrique, se produit localement dans le bâtiment, notamment dans un circuit électrique local faisant partie de l'installation, sans multiplier les appareils de coupure mais en réutilisant préférentiellement les capacités de coupure d'un sectionneur existant, du type disjoncteur différentiel ou disjoncteur de surcharge, tout en limitant, entre autres, les modifications à apporter à l'installation électrique elle-même.

Il est ainsi proposé de prévoir, entre la mesure du comportement du circuit et l'ouverture de son alimentation, une communication sans connectique dédiée, en particulier sans fil ou réutilisant les câbles d'alimentation de puissance du circuit eux-mêmes.

A cet effet, l'invention a tout d'abord pour objet un appareil électrique aval, tel que défini par l'objet de la revendication 1.

L'invention a aussi pour objet un appareil électrique amont, tel que défini par l'objet de la revendication 6.

L'invention a aussi pour objet un équipement conforme à l'objet de la revendication 10, comprenant un tel appareil électrique amont et un tel appareil électrique aval, montés de sorte que le moyen de déclenchement agit sur des contacts électriques qui conditionnent la circulation d'énergie électrique dans les conducteurs de l'appareil électrique aval. L'appareil électrique amont et l'appareil électrique aval sont donc arrangés pour coopérer spécifiquement l'un avec l'autre, en particulier de par l'utilisation d'une même technologie pour la circulation d'information.

Enfin, l'invention a encore pour objet un procédé de mise en oeuvre, à savoir un procédé de surveillance d'un circuit électrique conforme à l'objet de la revendication 12.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
- la figure 1 montre un montage d'un bloc de restitution, dans lequel est montée l'unité de traitement et d'un bloc d'action ;
- la figure 2 montre un autre montage, dans lequel l'unité de traitement est montée dans le bloc d'action ;
- la figure 3 représente un schéma ou chacun des deux blocs a une unité de traitement, le bloc d'action comprenant, en outre, une mémoire ;
- la figure 4 montre un équipement électrique où la communication se fait par le principe des courants porteurs en ligne ;
- la figure 5 montre un équipement électrique où la communication se fait par déséquilibre ;
- la figure 6 illustre une réalisation concrète ;

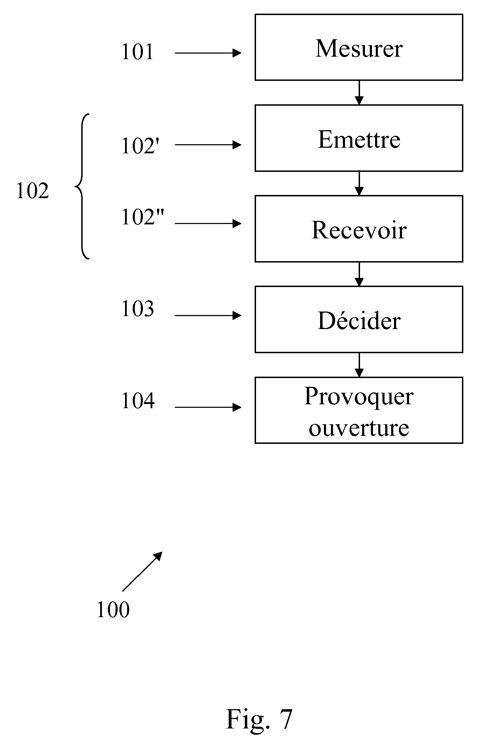

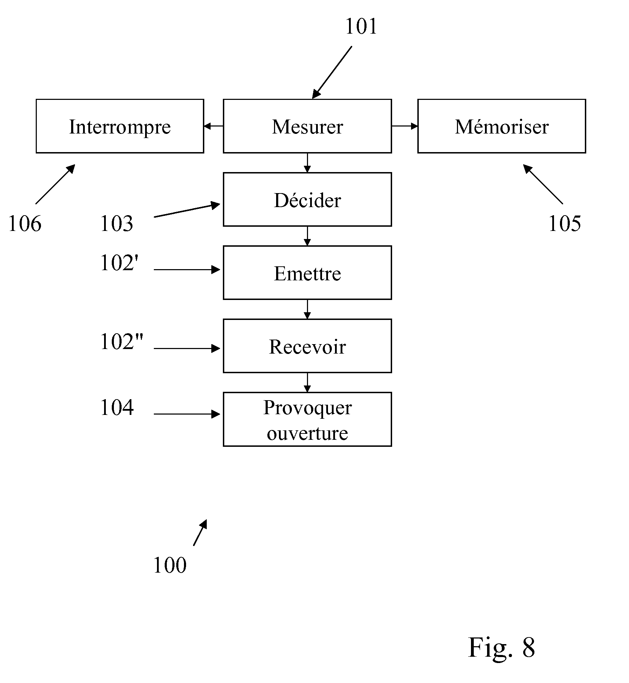

- les figures 7 et 8 illustrent le procédé.

L'invention a donc tout d'abord pour objet un appareil électrique aval 10 comprenant des conducteurs 2', 2" pour la circulation d'électricité et des bornes pour leur connexion ainsi qu'au moins un bloc de restitution 13 comprenant
au moins un moyen de mesure 5, pour mesurer au moins une caractéristique de fonctionnement du circuit électrique 1 que forment lesdits conducteurs 2', 2"
au moins un moyen d'émission 7, pour émettre un signal représentatif du fonctionnement mesuré, à destination d'un moyen de réception 8 dudit signal, adapté audit moyen d'émission 7.

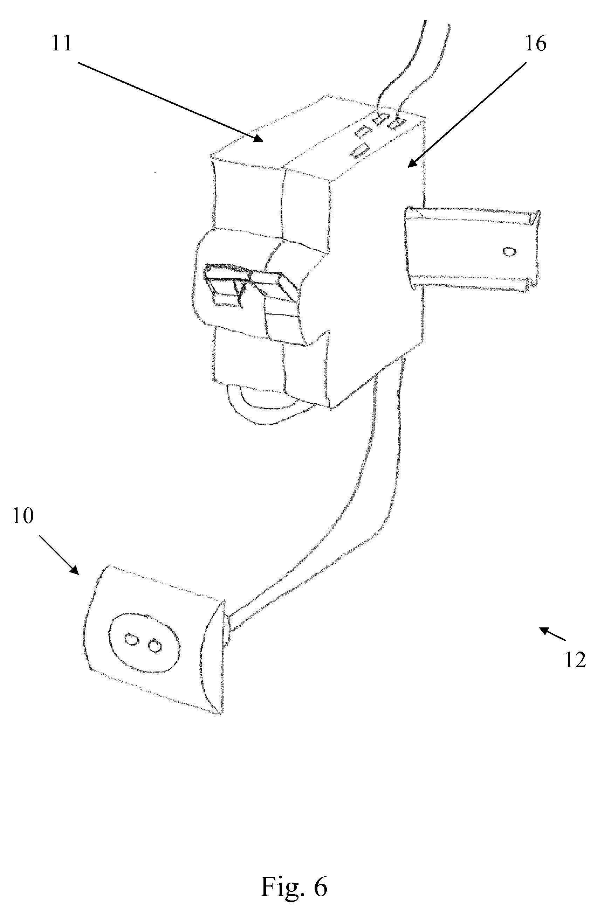

Ces conducteurs 2', 2" forment ainsi un circuit électrique 1 que comprend l'appareil électrique aval 10, pour une circulation d'électricité de puissance, en particulier 230 volts à plus d'une dizaine d'ampères. Les bornes permettent d'alimenter ces conducteurs 2', 2". Comme il sera encore décrit plus loin, l'appareil électrique aval 10 peut être un consommateur électrique, c'est-à-dire un appareil branché en bout de ligne dans une installation électrique domestique qui l'alimente, du type équipement électroménager, luminaire, ou autre. L'appareil électrique aval 10 peut aussi être un des composants de l'installation électrique, comme un socle de branchement, voire un interrupteur, voir la figure 6.

Ces conducteurs 2', 2" forment ainsi un circuit électrique 1 dont il est nécessaire de surveiller le fonctionnement, ce que réalise le au moins un moyen de mesure 5. Ces conducteurs 2', 2" peuvent être au nombre de deux, dans un montage phase-neutre, voire trois, dans un câblage avec prise de terre, et assurent la circulation d'un courant de puissance dans l'appareil électrique aval 10.

Le moyen de mesure 5 assure donc la mesure d'au moins une caractéristique de fonctionnement du circuit électrique 1 que comprend l'appareil électrique aval 10, lors de la circulation d'électricité dans les conducteurs 2', 2" qui le constituent. Cette caractéristique peut être, par exemple, une température dans l'environnement du circuit électrique 1, un voltmètre pour mesurer la tension entre les conducteurs 2', 2", voire un ampèremètre pour mesurer le courant circulant dans au moins l'un des conducteurs 2', 2", etc. Le moyen de mesure 5 sert donc à surveiller une caractéristique qui peut être représentative d'un risque, comme un risque d'incendie en particulier. Comme il sera décrit plus loin, le moyen de mesure 5 consiste préférentiellement en un voltmètre, pour mesurer la tension entre deux conducteurs 2', 2", et ce afin de détecter une diminution progressive de la tension entre eux, signe d'un vieillissement et/ou d'un mauvais contact pouvant amener un départ de feu.

Concernant le moyen de mesure 5, il peut donc s'agir de tout moyen capable de relever une grandeur représentative du fonctionnement du circuit électrique et qui peut être utilisée pour identifier, directement ou indirectement, un défaut électrique dans ledit circuit électrique 1, pouvant amener à un risque électrique, comme le déclenchement d'un incendie. Il peut s'agir d'un voltmètre entre la ligne de phase et la ligne de neutre dans le circuit électrique surveillé, mais aussi d'un tore dans lequel circulent les lignes de phase et permettant de quantifier l'ampérage, un tore dans lequel circulent les lignes de phase et la ligne de neutre, dans le but d'identifier une fuite à la terre, ou encore un capteur à effet Hall, etc.

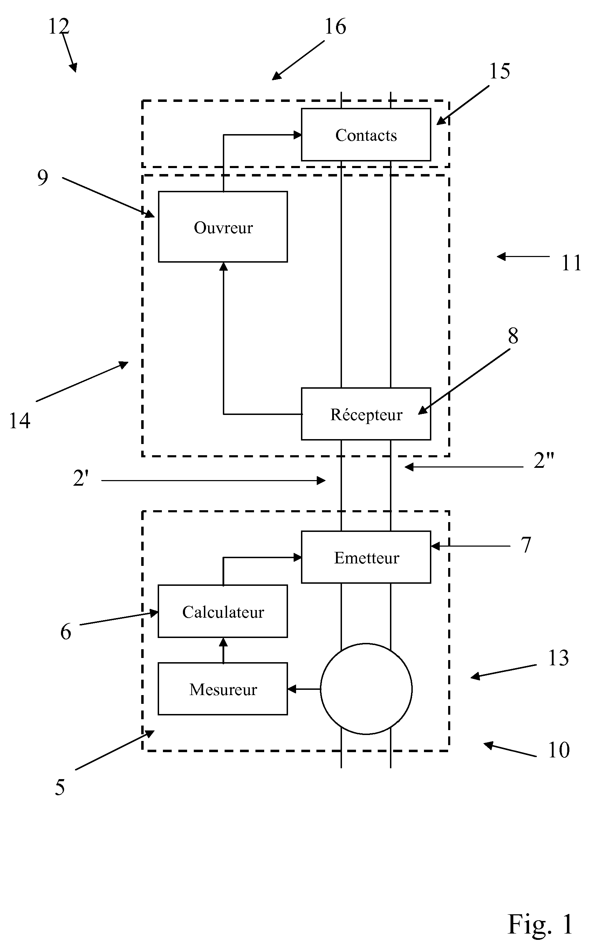

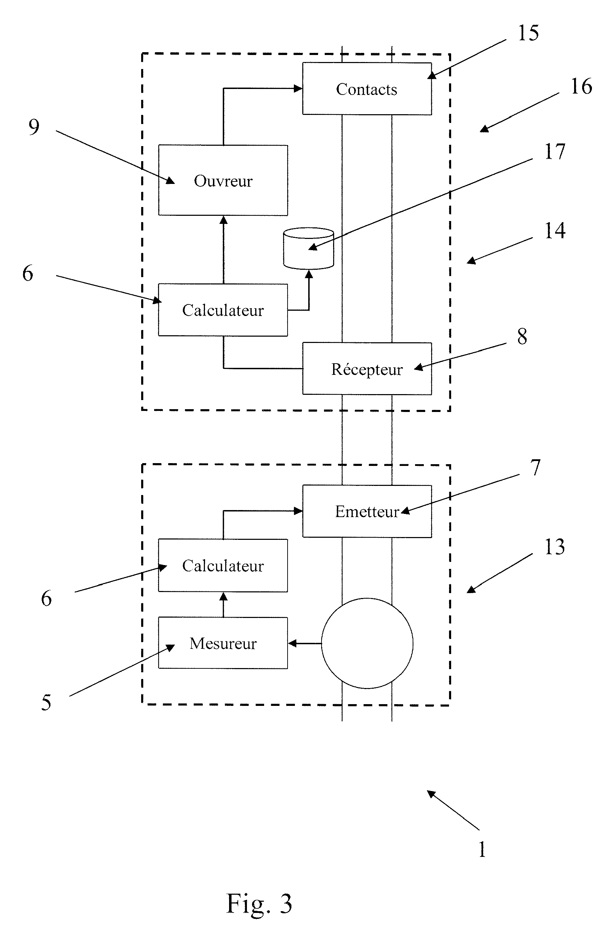

Le signal envoyé par le moyen d'émission 7 peut être directement la valeur mesurée dans le au moins un moyen de mesure 5, ou, dès lors que, comme le montrent les figures 1 ou 3, l'appareil électrique aval 10 comprend une unité de traitement 6 pouvant appliquer une logique aux mesures relevées par le moyen de mesure 5, être un signal représentant l'occurrence d'un défaut. L'unité de traitement 6 peut alors interpréter les mesures et servir à ne générer de signal que dans le cas où il est estimé que les mesures relevées sont représentatives d'un défaut prédéfini: surchauffe, ampérage trop élevé, temps d'utilisation excessif, etc.

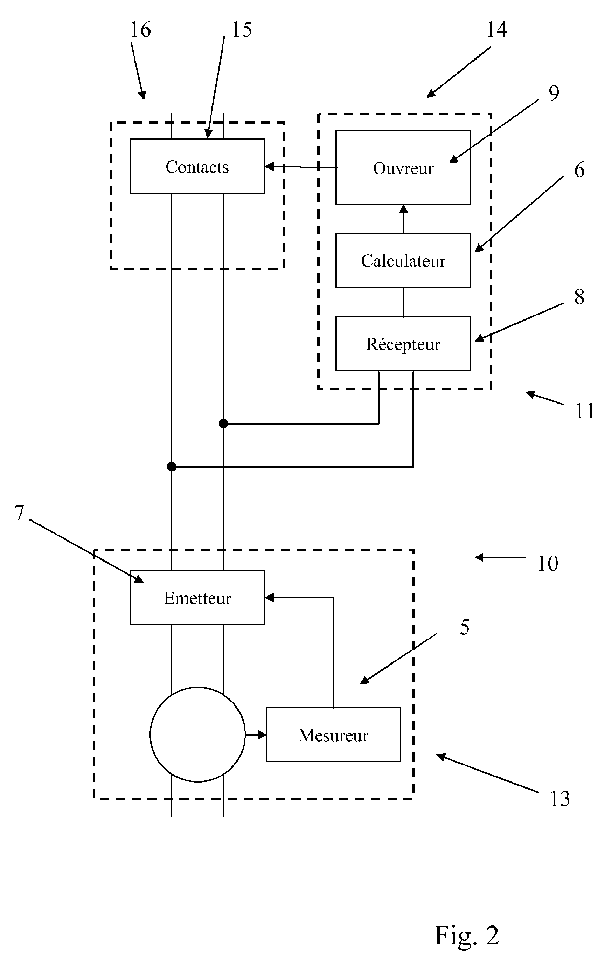

L'appareil électrique aval 10 comprend donc éventuellement une unité de traitement 6, qui reçoit les mesures relevées par le au moins un moyen de mesure 5 et qui pilote le au moins un moyen d'émission 7 en conséquence. Dans certaines réalisations, le moyen de mesure 5 est donc directement connecté à une unité de traitement 6 dans le bloc de restitution 13. L'unité de traitement 6 peut être un calculateur, comme un microprocesseur. Le moyen de mesure 5 fournit donc à l'unité de traitement 6 directement les résultats de ses mesures, et l'unité de traitement 6 peut ensuite envoyer ces résultats, lors d'une étape d'émission 102', pour qu'ils soient alors traités par une autre unité de traitement 6 connectée entre le moyen de réception 8 et le moyen de déclenchement 9, comme aux figures 2 ou 3, ou envoyer directement, lors de l'étape d'émission 102', une consigne d'ouverture compte tenu d'une logique de décision qu'elle applique.

Selon l'invention, le au moins un moyen d'émission 7 émet le signal sans câblage dédié à cette émission 102'. Comme le au moins un moyen d'émission 7 est arrangé pour émettre le signal sans câblage spécifique à la transmission 102 de signal, il n'est pas nécessaire de mettre, dans l'installation électrique du bâtiment, de nouveaux câbles dès lors qu'il est souhaité de mettre en place un appareil électrique aval 10 de ce type, c'est-à-dire comprenant, outre les bornes de branchement, pour la puissance, un bloc de restitution 13 tel que décrit, pour la sécurité.

Différentes technologies d'émission de signal sans câble dédié sont possibles, comme la communication sans fil, par exemple, ou aussi la communication utilisant les conducteurs 2', 2" du circuit électrique 1 eux-mêmes. En effet, en utilisant le principe des courants porteurs en ligne, CPL, il est possible d'envoyer un signal à l'aide des conducteurs 2', 2" surveillés eux-mêmes, ce signal étant ensuite véhiculée dans tout le câblage de l'installation électrique utilisé pour alimenter en puissance l'appareil électrique aval 10.

Une autre façon d'utiliser les conducteurs 2', 2" eux-mêmes peut être, par exemple, de créer artificiellement un défaut de fuite à la terre, à une fréquence telle que le disjoncteur différentiel en amont de l'installation électrique n'y est pas sensible, par exemple entre 5 kiloHertz et 2 mégaHertz, préférentiellement entre 500kiloHertz et 1,5mégaHertz. Dans une technologie de ce type, le moyen d'émission 7 consiste alors essentiellement en un commutateur, pouvant mettre en communication électrique la ligne de terre avec l'une des autres lignes du circuit électrique 1, neutre ou phase, et qui peut être commuté suffisamment rapidement pour que la fermeture occasionnelle de la liaison électrique, suivie de son ouverture, puisse former une unité de codage à une fréquence dans la plage ci-dessus. Des détails de cette technologie seront donnés plus loin.

Dans certaines réalisations, illustrées à la figure 2, l'unité de traitement 6 est connectée tant au moyen de réception 8 qu'au moyen de déclenchement 9. L'unité de traitement 6 reçoit alors des informations du moyen de réception 8. Il peut s'agir du résultat des mesures du moyen de mesure 5, ou encore d'une consigne de déclenchement.

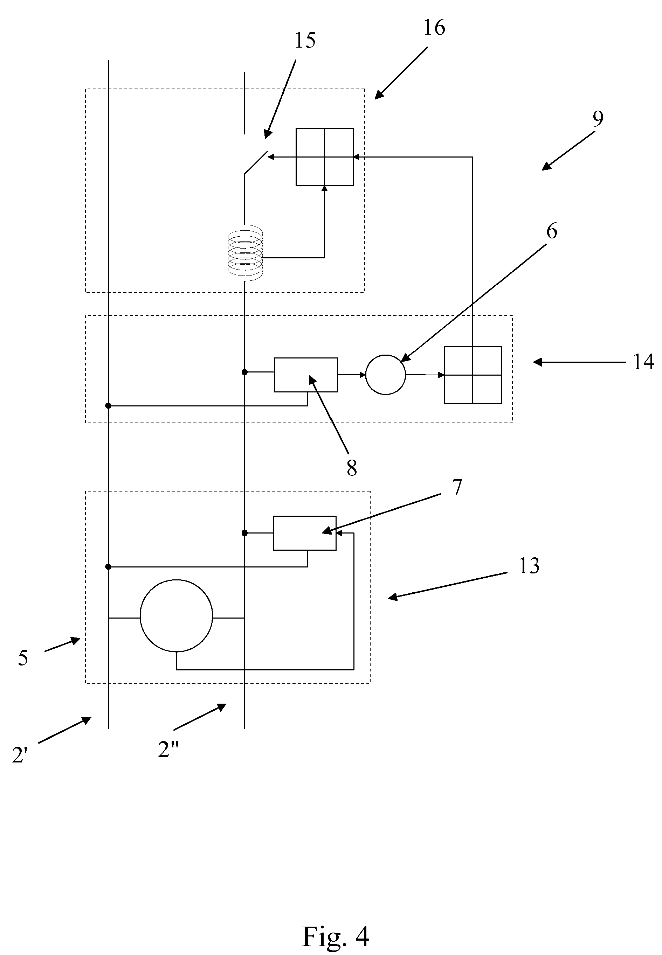

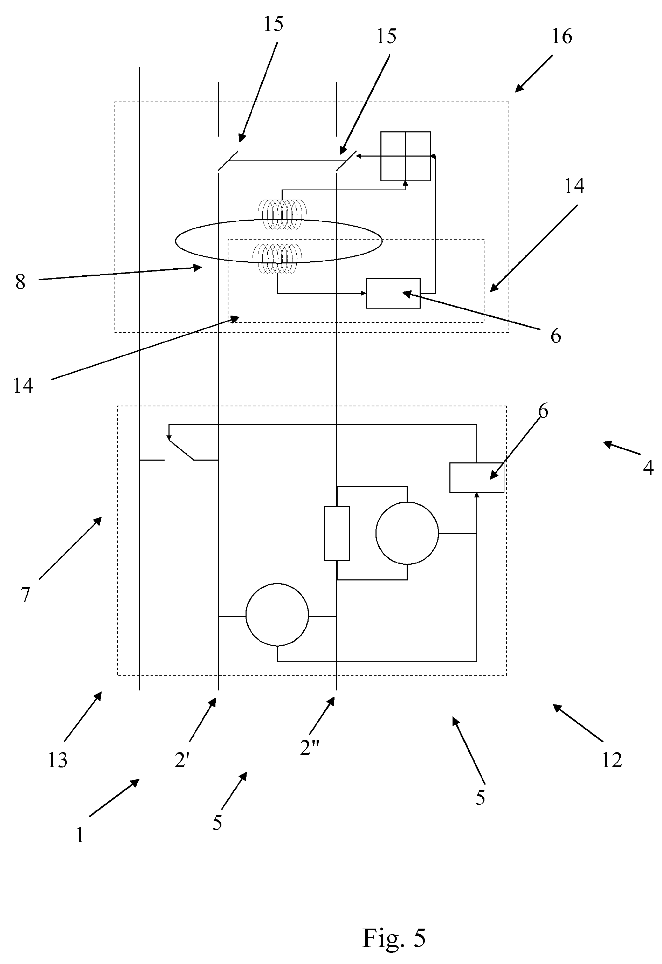

Le moyen d'émission 7 est donc apte à émettre de l'information codée. Préférentiellement, le codage est réalisé par le moyen d'émission 7 lui-même, ou au moins dans le bloc de restitution 13. Le moyen de réception 8, quant à lui, est apte à recevoir l'information codée, et, préférentiellement, à la décoder. Le décodage se faisant au moins au niveau du bloc d'action 14. Ainsi, dans le cas d'une transmission 102 par courant porteur, comme dans la figure 4, le moyen d'émission 7 et le moyen de réception 8 prennent chacun la forme d'un modem compatible avec ce type de communication. Dans le cas où la transmission 102 se fait par des déséquilibres, comme à la figure 5, le moyen d'émission 7 est apte à provoquer un déséquilibre du circuit électrique 1, le moyen de réception 8 étant apte à détecter, voire à quantifier, un tel déséquilibre, et comprenant un tore à cet effet.

Selon une caractéristique additionnelle possible, le au moins un moyen d'émission 7 superpose au courant alternatif circulant dans les conducteurs 2', 2" un courant à plus haute fréquence et de plus faible énergie. Dans ce type de réalisations, le au moins un moyen d'émission 7 réutilise donc le principe des courants porteur en ligne, sans toutefois nécessairement suivre la norme de codage associée. Le moyen d'émission 7 prend donc la forme d'un modem émetteur, permettant de superposer à l'électricité circulant dans les conducteurs 2', 2", une électricité dont l'amplitude et la fréquence représentent un codage du signal.

Plusieurs fréquences et plusieurs amplitudes peuvent bien sur être utilisées simultanément. Ainsi, le signal est véhiculé directement sur les lignes électriques de l'installation connectées aux conducteurs 2', 2". Ces lignes font partie du câblage électrique de l'installation domestique pour la fourniture de puissance aux différents équipements qu'elle doit alimenter. Ce câblage est donc normalement tiré, entre autres, entre les différents points de branchement, socles et autre. Il suffira donc de prévoir un moyen de réception 8, compatible avec cette technologie de communication, et donc capable de traiter une superposition de courants alternatifs et de décoder le signal porté par la composante de faible énergie et de haute fréquence.

Ce principe de communication, en superposant un courant de codage au courant circulant dans les conducteurs 2', 2" formant le circuit électrique 1 surveillé, permet d'obtenir une communication omnidirectionnelle, à direction de l'ensemble des éléments de l'installation électrique domestique, en amont ou en aval du circuit électrique 1 lui-même.

Selon une caractéristique additionnelle possible, le au moins un moyen de mesure 5 consiste essentiellement en un voltmètre pour mesurer la tension entre deux conducteurs 2', 2". L'appareil électrique aval 10 comprend donc un moyen de mesure 5 de la tension entre au moins deux des conducteurs 2', 2". Ce moyen de mesure 5 de la tension envoie ensuite préférentiellement le signal mesuré à une unité de traitement 6, qui pilote le au moins un moyen d'émission 7, préférentiellement un modem type CPL comme décrit plus haut, pour envoyer un signal représentant la mesure, ou, préférentiellement, un signal représentant l'occurrence d'un défaut. Le signal pourra ensuite être reçu n'importe où ailleurs dans l'installation électrique, et traité pour stopper la circulation d'électricité, bien entendu préférentiellement la circulation d'électricité dans le circuit électrique 1 surveillé. Une baisse régulière de la tension peut par exemple représenter le début d'un échauffement critique, voire une fusion d'un conducteur en amont ou en aval du au moins un moyen de mesure 2.

Selon une caractéristique additionnelle possible, le bloc de restitution 13 comprend, en outre, un indicateur d'état, pour indiquer la survenue d'un défaut. Lorsqu'un défaut apparaît dans le circuit électrique 1 et qu'il est détecté grâce à l'au moins un moyen de mesure 5, la circulation d'énergie électrique est interrompue, comme il sera décrit plus loin. L'identification d'un défaut sur la base des mesures effectuées peut se faire avant ou après l'émission du signal.

Après la coupure d'électricité, au moins l'appareil électrique aval 10 n'est plus alimenté, l'ouverture se faisant toutefois à un embranchement amont de l'installation électrique proche de l'appareil électrique aval 10 défectueux, pour éviter d'interrompre l'alimentation d'autres appareils électriques non défectueux. Il est avantageux d'éviter qu'un défaut au niveau d'un seul appareil électrique fasse cesser la circulation d'énergie dans toute l'installation électrique à partir d'un sectionneur central, par exemple, et ce afin d'assurer la continuité de service. Quel que soit le nombre d'appareils concernés par la coupure de l'alimentation électrique en cas de défaut, la prévision d'un indicateur d'état au niveau de l'appareil électrique aval 10 peut être fort utile. Un tel indicateur montre que c'est lui qui est à l'origine de la coupure. L'indicateur fait préférentiellement partie du bloc de restitution 13.

Lorsque l'appareil électrique aval 10 est muni d'une unité de traitement 6 qui analyse la mesure effectuée par le au moins un moyen de mesure 5 et qui identifie un défaut, il suffit de commander l'envoi d'un signal de défaut et ainsi de piloter l'indicateur. Un tel indicateur peut être un curseur déplacé par une serrure électromagnétique. Il peut aussi s'agir d'un indicateur lumineux, clignotant ou autre. S'il est alimenté par les conducteurs 2', 2" eux-mêmes, c'est à la remise en marche de l'installation défectueuse que l'indicateur sera allumé. L'alimentation électrique d'un indicateur lumineux peut aussi être autonome, par batterie rechargeable, il sera dans ce mis en marche en cas de coupure suite à un défaut, même si les conducteurs 2', 2", et donc l'appareil électrique aval 10, ne sont pas alimentés. Un indicateur sonore peut aussi être utilisé.

Grâce à cet indicateur, l'appareil électrique aval 10 défectueux se signale de lui-même, ce qui est particulièrement avantageux lorsque le défaut a amené à une coupure de tout un ensemble d'équipements électriques duquel il fait partie, alors même que ce défaut n'est pas encore forcément visible de l'extérieur.

Selon une caractéristique additionnelle possible de l'appareil électrique aval 10, comme le montre la figure 6, il prend la forme d'un socle de branchement terminal d'une installation électrique domestique, auquel différents types de consommateurs électriques peuvent être raccordés. Un tel socle peut ainsi prendre la forme d'un appareillage à monter en saillie ou encastré dans une paroi et présente un puits pour l'accueil d'une fiche de connexion standard, avec des broches pour la connexion électrique. L'appareil électrique aval 10 est alors un équipement de l'installation électrique assurant la transmission d'énergie électrique. Il comprend des bornes pour la connexion des câbles de l'installation électriques, ainsi que des bornes pour la connexion à une fiche. Il présente aussi éventuellement, pour son montage, des griffes d'accrochage à des parois d'une boîte.

L'invention a aussi pour objet un appareil électrique complémentaire avec le premier, à savoir appareil électrique amont 11, comprenant un bloc d'action 14 comprenant lui-même
un moyen de réception 8 de signal, pour recevoir un signal de la part d'un moyen d'émission 7 adapté,
un moyen de déclenchement 9 piloté, apte à provoquer l'ouverture de contacts électriques 15 d'un sectionneur 16 en vue de stopper une alimentation en électricité en aval desdits contacts, et ce sur la base du signal reçu par le moyen de réception 8.

Cet appareil électrique est dit amont car il conditionne l'alimentation d'énergie électrique à l'appareil électrique aval 10. Il convient toutefois de remarquer que dans l'absolu, dès lors que la communication entre l'appareil électrique aval 10 et l'appareil électrique amont 11 est omnidirectionnelle, comme avec le principe des courants porteur en ligne, l'appareil électrique amont 11 pourrait aussi être branché à la suite de l'appareil électrique aval 10, tout en agissant mécaniquement sur le sectionneur 16 qui alimente ce dernier.

Le bloc d'action 14 comprend donc un moyen de réception 8 pour recevoir un signal, ce moyen de réception 8 étant de technologie compatible avec celle du moyen d'émission 7, de sorte qu'une transmission d'information peut se faire du moyen d'émission 7 vers le moyen de réception 8.

Le sectionneur 16 peut être un disjoncteur de ligne, qui présente alors des contacts électriques 15 qui peuvent être séparés par le mouvement d'une serrure qu'il comprend, normalement actionnée par un bilame ou un actionneur électromagnétique en cas de surintensité et présentant une manette d'actionnement externe, voir la figure 6, un disjoncteur différentiel qui est sensible à des déséquilibres électriques et qui ouvre des contacts électriques 15 en cas de fuite à la terre, ou autre type de sectionneur.

Le moyen de déclenchement 9 peut ainsi être un actionneur qui va déséquilibrer la serrure d'un sectionneur 16 existant. Le moyen de déclenchement 9 agit donc compte tenu du signal réceptionné par le moyen de réception 8, qui peut être un ordre d'ouverture ou une information à laquelle une logique de traitement doit être appliquée au sein d'une unité de traitement 6 du bloc d'action 14, voir figures 2 ou 3, pour éventuellement aboutir à une décision d'ouverture des contacts et donc d'action du moyen de déclenchement 9 qui aura pour conséquence l'ouverture des contacts électriques 15 d'un sectionneur 16. Comme il sera encore décrit plus loin, le bloc d'action 14 peut être monté dans le sectionneur 16 lui-même, ce dernier formant alors l'appareil électrique amont 11.

L'appareil électrique amont 11 peut donc agir sur les contacts électriques 15 d'un sectionneur 16 existant grâce à son moyen de déclenchement 9 qui peut, par exemple, agir directement sur la manette du disjoncteur de ligne qui forme le sectionneur 16, en étant lié mécanique à elle comme l'illustre la figure 6, ou agir directement sur la serrure, grâce à des fenêtres prévues dans le boîtier du disjoncteur de ligne et à travers lesquelles une pièce mobile peut passer pour agir sur la serrure du sectionneur 16.

Selon l'invention, le au moins un moyen de réception 8 reçoit le signal sans câblage dédié à cette réception. La transmission de signal depuis le moyen d'émission 7 jusqu'au moyen de réception 8 ne nécessite donc pas de câblage spécifique, l'échange d'information pouvant donc se faire sans rajouter de câblage dans l'installation électrique existante dans les locaux, ceux utilisés pour l'alimentation de puissance de l'appareil électrique aval 10 pouvant être réutilisés.

De façon compatible avec les technologies décrites plus haut pour le moyen d'émission 7, une communication sans fil peut être envisagée, le moyen de réception 8 étant alors un moyen de réception 8 sans fil, une communication utilisant des déséquilibres électriques par fuite à la terre à une fréquence telle qu'un disjoncteur différentiel ne peut pas déclencher, ou encore une communication utilisant le principe des courants porteur en ligne, et donc en superposant un courant de codage à une porteuse.

Dans ce dernier cas, le moyen de réception 8 est un modem de réception, capable d'extraire le signal superposé au courant alternatif normal par le moyen d'émission 7, et de le décoder. Dans un tel cas, l'appareil électrique amont 11 prend alors la forme d'un équipement auquel les lignes électriques de l'installation peuvent être reliées, sans pour autant générer une importante consommation d'énergie. Il peut réceptionner le courant de puissance et le renvoyer en aval à d'autres appareils, et être ainsi branché directement au sectionneur 16 sur lequel il agira mécaniquement, le cas échéant.

L'appareil électrique amont 11 peut agir sur un sectionneur 16 existant, ou comprendre lui-même des contacts électriques 15 sur lesquels il est possible d'agir pour stopper la circulation d'électricité. Dans ce dernier cas, l'appareil électrique amont 11 prend la forme d'un sectionneur 16, ouvrant un circuit électrique en cas de défaut auquel il est sensible de par sa conception, comme une surcharge ou une surintensité pour un disjoncteur de ligne, mais aussi en cas de défaut auquel il n'est normalement pas sensible de par sa conception, mais détecté grâce à une mesure effectuée au niveau de conducteurs 2', 2" en aval, et provoquant une action sur les contacts électriques 15 qu'il comprend grâce à un organe piloté sur la base du signal transmis.

Selon une caractéristique additionnelle possible, illustrée aux figures 4 et 6, le moyen de déclenchement 9 agit sur un sectionneur 16 existant, à côté duquel ledit appareil électrique amont 11 est monté.

Le sectionneur 16 peut être un disjoncteur de ligne, différentiel, disjoncteur de tête, ou tout autre appareil permettant de stopper une circulation d'énergie électrique. En effet, l'intérêt ici est bien de pouvoir stopper la circulation d'électricité dans les conducteurs 2', 2" formant le circuit électrique 1 où les mesures effectuées sont significatives d'un défaut, le bloc de restitution 13 opérant au niveau de ces conducteurs 2', 2", le bloc d'action 14 agissant sur les contacts électriques 15 du sectionneur 16.

L'appareil électrique amont 11 prend alors préférentiellement la forme d'un boîtier, pour être monté à côté d'un disjoncteur de ligne au sein d'un tableau électrique, une pièce mobile dépassant dudit boîtier pour agir sur le sectionneur 16 et forcer l'ouverture de ses contacts électriques 15. Le câblage peut être le suivant: les lignes reliées aux conducteurs surveillées par le bloc de restitution 13 dans l'appareil électrique aval 10 sont connectées directement au bloc d'action 14, grâce à quoi le signal véhiculé par le principe des courants porteurs en ligne est réceptionné par le moyen de réception 8, le sectionneur 16 étant branché en amont ou en aval du bloc d'action 14, et présentant alors à son tour une fonction d'ouverture supplémentaire des contacts électriques 15.

Le câblage illustré dans la figure 2 montre un bloc de restitution 13 câblé directement au sectionneur 16, disjoncteur de ligne classique. Le bloc d'action 14 est branché électriquement par repiquage en parallèle des conducteurs reliant, d'une part, le bloc de restitution 13, et, d'autre part, le sectionneur 16. La tension présente entre les conducteurs alimentant le bloc de restitution 13 s'installe donc aux bornes du bloc d'action 14, lui permettant ainsi de détecter le signal véhiculé sur les lignes, voire aussi d'en extraire l'énergie nécessaire à son fonctionnement. Ainsi, les bornes du bloc d'action 14 sont connectées sur les lignes entre le sectionneur 16 et le bloc de restitution 13, l'une sur la ligne de phase, l'autre sur la ligne de neutre. Les éventuels borniers doubles du sectionneur peuvent aussi être réutilisés pour le branchement du bloc d'action 14, la modification du câblage étant alors extrêmement limitée, comme le montre la figure 6.

L'appareil électrique amont 11 peut avoir le même aspect et les mêmes dimensions qu'un appareil modulaire de tableau de répartition destiné à un montage sur rail DIN, et présenter par exemple un décrochement pour la connexion par embrochage à un disjoncteur qui peut alors être de conception classique. L'appareil électrique amont 11 peut aussi être la combinaison d'un disjoncteur modulaire classique et d'un élément rapporté contenant la fonction de sécurité additionnelle.

Selon une caractéristique additionnelle possible, le moyen de déclenchement 9 est conçu pour agir sur la serrure d'un sectionneur 16 existant et à côté duquel il est placé, en traversant les parois qui les séparent. Les sectionneurs 16, en particulier les disjoncteurs, présentent une serrure mobile sur laquelle sont montés au moins un des contacts électriques 15, et le boîtier du sectionneur 16 présente, sur une paroi latérale, une ouverture qui permet d'agir sur la serrure depuis le côté. L'appareil électrique amont 11 présente donc un boîtier du même type que celui d'un disjoncteur monté sur un rail DIN d'un tableau de répartition, le moyen de déclenchement 9 pouvant alors avoir une action latérale sur la serrure du disjoncteur.

Le câblage du disjoncteur peut être un câblage normal, ou il peut être branché en amont ou en aval de l'appareil électrique amont 11.

Dans d'autres modes de réalisation, le bloc d'action 14 comprend, en outre les contacts électriques 15 sur lesquels agit le moyen de déclenchement 9. L'appareil électrique amont 11 forme alors lui-même un équipement de coupure, sectionneur 16, qui surveille des lignes électriques alimentant un circuit 1 auquel appartiennent les conducteurs 2', 2" électriques surveillés par le bloc de restitution 13, mais reçoit aussi par ces lignes électriques un signal en cas d'occurrence d'un autre type de défaut.

Les contacts électriques 15 s'ouvrent donc si un signal correspondant est transmis et reçu par le moyen de réception 8, voire aussi si un autre type de défaut est détecté au coeur même de l'appareil électrique amont 11, type surintensité. Ainsi, par exemple, l'appareil électrique amont 11 peut être un disjoncteur de ligne classique, dont les contacts électriques 15 sont déplacés par un bilame ou par un actionneur électromagnétique, ces contacts électriques 15 étant aussi mis en mouvement si un signal correspondant est réceptionné par le moyen de réception 8.

Le bloc d'action 14 comprend préférentiellement aussi une unité de traitement 6 qui peut décoder le signal véhiculé sur les lignes surveillées, l'interpréter, et commander l'ouverture des contacts électriques 15.

L'invention a aussi pour objet un équipement électrique 12 comprenant, d'une part, un appareil électrique amont 11 tel que décrit plus haut, ainsi que, d'autre part, un appareil électrique aval 10 tel que décrit plus haut. Ces appareils sont montés de sorte que le moyen de déclenchement 9 agit sur des contacts électriques 15 qui conditionnent la circulation d'énergie électrique dans les conducteurs 2', 2" de l'appareil électrique aval 10, de sorte que, ainsi montés, le bloc de restitution 13 surveille l'état du circuit électrique 1 dont les conducteurs 2', 2" font partie, et, en cas de défaillance, peut provoquer l'ouverture d'un sectionneur 16 amont qui va stopper la circulation d'énergie dans ces conducteurs 2', 2". Il est ainsi possible d'obtenir une fonction de protection de l'appareil électrique aval 10 alors qu'il ne comprend aucun élément de coupure, et qu'il réutilise la fonction de coupure d'un autre sectionneur, pour des phénomènes auquel ledit sectionneur n'est a priori pas sensible, et ce sans rajouter de câblage par rapport aux câblage d'alimentation en puissance de l'appareil électrique aval 10.

L'équipement électrique 12 comprend aussi une unité de traitement 6 pour remplir au moins l'une des fonctions suivantes : contrôler le moyen de mesure 5, contrôler le moyen d'émission 7, contrôler le moyen de réception 8, contrôler le moyen de déclenchement 9, décider de la nécessité de stopper la circulation d'électricité, le codage et décodage, etc.

L'unité de traitement 6 prend prendre la forme d'un processeur, monté dans le bloc de restitution 13 et/ou un processeur monté dans le bloc d'action 14.

Différentes combinaisons sont donc envisageables, par exemple : l'appareil électrique aval 10 est un consommateur électrique, du type appareil électroménager, l'appareil électrique amont 11 étant le socle de branchement duquel il puise son énergie électrique. Il est ainsi possible de stopper l'alimentation électrique au niveau du socle, par exemple à l'aide d'un relais ou autre, et ce grâce à un signal envoyé par le consommateur lui-même. L'appareil électrique aval 10 peut aussi être un socle de branchement, l'appareil électrique amont 11 étant une pièce rapportée sur un sectionneur 16 existant, comme à la figure 6.

Selon une caractéristique additionnelle possible, le moyen de déclenchement 9 agit sur un disjoncteur de ligne dédié à la surveillance de la partie de l'installation électrique où se trouve l'appareil électrique aval 10.

Les différents composants de l'installation électrique d'un bâtiment sont organisés sous forme de ramification plus ou moins complexe, un disjoncteur de ligne étant chaque fois utilisé pour protéger une partie seulement de l'installation, afin d'éviter qu'un défaut local empêche toute l'installation de fonctionner. Il est donc proposé, en cas de défaillance de l'appareil électrique aval 10, d'agir, à l'aide de l'appareil électrique amont 11, sur le disjoncteur qui protège la partie du réseau domestique dans laquelle se trouve l'appareil électrique aval 10. Un tel montage permet, d'une part, de garantir la continuité de service pour les éléments de l'installation qui ne sont pas connectés dans la partie non alimentée, et, d'autre part, de mieux localiser le défaut et identifier l'appareil électrique aval 10 responsable de l'ouverture.

Un tel équipement électrique 12 fonctionne donc de façon sûre, sans pour autant nécessiter un autre câblage que celui de l'alimentation de puissance de l'appareil électrique aval 10. Il suffit en effet de réutiliser le câblage existant entre un disjoncteur de ligne et un endroit d'utilisation, socle de branchement, luminaire, consommateur, ou autre. L'appareil électrique aval 10 est donc branché au niveau de l'endroit d'utilisation du bloc de restitution 13 décrit, monté par exemple en remplacement d'un socle de branchement simple, les conducteurs branchés sur le disjoncteur de ligne étant ensuite simplement reliés à l'appareil électrique amont 11. La mise en place est donc très simple.

Selon une caractéristique additionnelle possible, l'équipement électrique 12 selon l'invention comprend, en outre, une mémoire 17, monté dans le bloc de restitution 13 ou le bloc d'action 14, apte à mémoriser 105 au moins une partie du signal reçu 102", notamment des données d'identification du circuit électrique 1, ou des données représentatives du fonctionnement, telles que les valeurs obtenues lors de la mesure 101 ou un identifiant du circuit électrique 1. La mémoire 17 peut notamment être connectée à l'unité de traitement 6 ou au moyen de mesure 5. L'intérêt de mémoriser des informations concernant l'identité du circuit électrique 1 responsable de l'ouverture des contacts électriques 15 par le sectionneur 16 est qu'il est alors possible, dès que le sectionneur 16 principal est remis en marche et que de l'électricité circule à nouveau, de consulter l'état de la mémoire 17 et de conclure quant à l'identité du circuit électrique 1 qui a provoqué l'ouverture. Cela revêt un avantage particulier lorsqu'il s'agit de surveiller un grand nombre de circuits électrique 1.

L'invention a aussi pour objet un procédé de surveillance 100 d'un circuit électrique, comprenant des étapes consistant essentiellement à
mesurer 101 un paramètre représentatif du fonctionnement du circuit électrique 1 ;
décider 103 de la nécessité de stopper la circulation d'électricité dans le circuit électrique 1 en tenant compte des résultats de la mesure 101 ;
transmettre 102 un signal représentatif du fonctionnement du circuit 1, à savoir émettre 102" et recevoir 102" ledit signal ;
provoquer l'ouverture 104 des contacts électriques 15 d'un sectionneur 16 amont au circuit électrique 1.

Le circuit électrique 1 comprend des conducteurs 2', 2", et c'est la circulation d'électricité au niveau de ces conducteurs 2é, 2" qui est surveillée, l'un des conducteurs 2', 2" étant préférentiellement reliée au neutre, l'autre à une phase. Des applications triphasées peuvent bien sûr être envisagées. Le circuit électrique 1 peut être dans un composant de l'installation électrique domestique, comme un socle de branchement, par exemple, ou dans un consommateur électrique, comme un équipement électroménager. Le circuit électrique 1 est alimenté en puissance et son fonctionnement est conditionné, en outre, par des sectionneurs 16 en amont, comme un disjoncteur de ligne, un disjoncteur différentiel, un disjoncteur principal, etc. Lorsque le sectionneur 16 ouvre la circulation d'électricité, le circuit électrique 1 dont on mesure le fonctionnement n'est plus alimenté.

L'avantage de l'invention, comme cela sera encore décrit plus loin, est donc de surveiller l'apparition d'un phénomène prédéfini au niveau du circuit électrique 1, du type élévation de température, de courant, baisse de tension, ou autre, et de forcer ensuite l'ouverture d'un sectionneur 16 amont, ce qui permet, par exemple, d'éviter que l'appareil électrique aval 10 qui comprend le circuit 1 ne soit endommagé, alors que le sectionneur 16 amont n'a pas encore détecté de situation dangereuse. Il est ainsi possible de protéger de la sur-exploitation la ligne, cette sur-exploitation pouvant provenir du dimensionnement ou de la vétusté de l'installation, par exemple. L'invention permet aussi de limiter les risques d'incendie.

Comme il a déjà été dit, la mesure 101, effectuée par le au moins un moyen de mesure 2 peut ainsi consister à mesurer des caractéristiques de l'électricité qui circule dans le circuit électrique 1, telles qu'une tension, un courant, ou encore à relever une température. Cette surveillance a principalement pour but de réduire les risques, comme les risques d'incendie, mais peut aussi, par exemple, être utilisée pour surveiller que la consommation ne dépasse pas la fourniture prévue dans l'abonnement, ou encore que le temps d'utilisation ne dépasse pas une valeur prédéfinie. Mesurer 101 peut donc consister essentiellement à quantifier l'électricité circulant dans au moins l'une des lignes électriques 2', 2", ampérage ou tension, ou autre, à relever une température aux alentours du circuit électrique 1, ou encore détecter l'occurrence d'un arc électrique par exemple.

L'étape consistant à décider 103 de la nécessité de stopper la circulation dans le circuit électrique 1 peut être mise en oeuvre par une unité numérique 6, utilisant une logique de raisonnement sur la base des informations qu'elle reçoit, représentant les mesures effectuées, mais peut aussi être mise en oeuvre par un circuit analogique, la commande d'ouverture étant ainsi le produit naturel d'un tel circuit auquel les mesures sont fournies en entrée.

Le signal transmis peut être directement les mesures relevées, l'ordre d'ouverture des contacts électriques 15, ou des données intermédiaires dans la logique amenant à leur éventuelle ouverture. Le signal transmis peut aussi englober un identifiant permettant d'identifier le circuit électrique 1 surveillé, c'est-à-dire l'appareil électrique aval 10 qui comprend le circuit électrique 1 : socle, rallonge, consommateur, etc. Transmettre 102 peut ainsi consister à faire circuler un signal représentatif dudit fonctionnement, notamment les valeurs obtenues lors de la mesure 101, l'existence et/ou la caractérisation d'un défaut de fonctionnement, ou encore une consigne de déclenchement.

Provoquer l'ouverture 104 des contacts électriques 15 amont au circuit électrique 1 se fait par une action mécanique ou autre, comme une action magnétique sur un actionneur électromagnétique existant d'un sectionneur 16 type disjoncteur de surcharge.

Provoquer 104 l'ouverture des contacts électriques 15 d'un sectionneur 16 amont peut consister essentiellement à forcer mécaniquement le mouvement de contacts mobiles, par exemple en entraînant la serrure depuis la manette extérieure, comme le montre la figure 6, ou en réutilisant tout ou partie de l'actionneur existant d'un disjoncteur, différentiel ou autre, agissant sur les contacts électriques 15 à partir d'un défaut, type surcharge, déséquilibre électrique, ou autre.

Généralement, un déséquilibre électrique provoque un courant électrique dans un tore au centre duquel circulent les conducteurs subissant le déséquilibre, ce courant électrique est ensuite utilisé pour générer un mouvement au niveau des contacts électriques 15. Provoquer l'ouverture peut donc consister, par exemple, à créer un tel courant qui entraînera, de façon similaire à un déclenchement standard, l'ouverture des contacts électriques 15.

Selon l'invention, transmettre 102 se fait sans câblage dédié, mais se fait en particulier sans fil ou avec le câblage d'alimentation du circuit électrique 1 lui-même. La transmission 102 d'un signal depuis le circuit électrique 1 jusqu'à l'organe agissant sur les contacts électriques 15 réutilise donc un câblage dédié à une autre fonction, en particulier l'alimentation d'énergie électrique au circuit électrique 1 de l'appareil électrique aval 10, ou à une autre transmission de signal, voire utilise une communication sans fil. Cela revêt un avantage particulier dans le cas où le procédé de surveillance 100 doit être mis en oeuvre en changeant simplement les équipements électriques branchés dans une installation électrique domestique, mais sans modifier le câblage lui-même. Il suffit alors de réutiliser par exemple le câblage dédié normalement à l'alimentation de puissance du circuit électrique 1. La transmission qui utilise les lignes d'alimentation de puissance du circuit électrique 1 repose donc sur une technologie du type courants porteur en ligne, ou encore provoquant des déséquilibres volontaires par une fuite à la terre à une fréquence de codage suffisamment rapide pour que le disjoncteur différentiel ne soit pas déclenché.

La sécurité du circuit électrique 1 peut donc être garantie sans ajouter d'élément de sécurité amont dans l'installation, et sans modifier le câblage électrique, puisque la communication se fait en utilisant les lignes électriques du circuit électrique 1, déjà installées. Utiliser les lignes surveillées présente l'avantage de n'avoir à effectuer pratiquement aucun autre changement. Notamment, les connexions électriques sont les mêmes que pour un appareil électrique aval 10 ne comprenant pas de bloc de restitution 13, et donc essentiellement uniquement alimenté en puissance.

Transmettre 102 consiste donc essentiellement à faire circuler électriquement une information sur les lignes surveillées. Les puissances électriques dédiées à cette circulation d'information sont donc préférentiellement d'un ordre de grandeur propre à la communication et non à la puissance. L'information étant véhiculée sur les lignes électriques, cette dernière se matérialise sous forme électrique : courant, tension, décalage de phase, fréquence, ou autre. Il est donc envisageable que l'électricité matérialisant l'information soit elle-même utilisée pour provoquer l'ouverture. Par exemple, si l'information est véhiculée sous la forme d'un courant dans une ligne de terre, comme il sera encore décrit plus loin, ce courant peut être alors interprété en tant que porteur de signal, voire être utilisé lui-même pour provoquer l'ouverture 104, en particulier avec des mécanismes électromécaniques.

Dans des modes de réalisation particuliers, mesurer 101 un paramètre représentatif consiste essentiellement à mesurer la tension entre deux conducteurs 2', 2" du circuit électrique 1,
l'interruption de l'alimentation électrique du circuit électrique 1 étant décidée dès lors qu'une baisse régulière de la tension est observée au-delà d'une période de temps prédéfinie. Une diminution progressive de la tension est un signe d'un risque élevé de dégradation voire de fusion d'un élément du circuit électrique, voire d'un élément en aval, dans le cas d'un socle de branchement. Il est donc avantageux de surveiller la tension aux bornes des conducteurs 2', 2" du circuit électrique 1, l'un d'eux étant relié au neutre, l'autre à la phase. Il est ainsi possible de garantir la sécurité de les éléments électriques placés en aval du circuit électrique 1 surveillé.

Selon une caractéristique additionnelle possible, l'étape de décision 103 de l'ouverture se fait avant l'étape d'émission 102' du signal, de sorte que le signal émis contient une instruction d'ouverture des contacts électriques 15. Bien entendu, le signal transmis peut aussi comprendre un identifiant du circuit électrique 1 surveillé, à savoir un identifiant propre à l'appareil électrique aval 10 défaillant, ou encore des valeurs mesurées.

Le traitement des mesures se fait donc au niveau de l'appareil électrique aval 10 qui comprend le circuit électrique 1, ce qui simplifie donc considérablement l'équipement destiné à recevoir le signal puis provoquer l'ouverture des contacts électriques 15 en amont du circuit électrique 1 surveillé.

Ainsi, il est possible de mémoriser des informations relatives à l'identité, notamment la localisation dans l'installation électrique, du circuit électrique 1 qui a provoqué le déclenchement. Comme la transmission 102 se fait préférentiellement en utilisant les lignes électriques surveillées, cette dernière n'est plus possible après déclenchement du sectionneur 16, puisque plus aucune électricité ne circule. Il est donc utile de transmettre 102 un identifiant au moins à l'occasion de la transmission 102 d'une information représentant une consigne de déclenchement, et préférentiellement même avec une information représentant les valeurs mesurées puisque la décision de provoquer le déclenchement peut être prise ultérieurement. Comme il sera encore décrit plus loin, l'information transmise 102, à savoir les résultats de mesure, la consigne de déclenchement et/ou l'identifiant du circuit électrique 1, peut ou peuvent être stockée ou stockées dans une mémoire 17.

Ainsi, dans les modes de réalisation concernés, le procédé de surveillance 100 comprend, en outre, une étape consistant essentiellement à mémoriser 105 au moins une partie du signal reçu 102", notamment des données d'identification du circuit électrique 1 ou des données représentatives du fonctionnement, telles que les valeurs obtenues lors de la mesure 101.

Selon une caractéristique additionnelle possible du procédé de surveillance 100, il comprend une étape consistant essentiellement à signaler le circuit électrique 1 à l'origine du déclenchement. C'est grâce à un bloc de restitution 13 que les mesures du circuit électrique 1 sont effectuées et que le signal est émis. Il est donc pertinent de signaler, au niveau de l'appareil électrique aval 10, qui comprend le circuit électrique 1 dont le fonctionnement est estimé défectueux, de signaler le défaut. Cela peut être mis en oeuvre en changeant l'état d'une mémoire que comprend le bloc de restitution 13 dès lors qu'il est décidé que les mesures effectuées doivent être interprétées comme signes d'une défaillance, et ce en particulier lorsque le traitement des mesures et la décision d'ouverture est effectuée avant la transmission 102, et donc au niveau du circuit électrique 1 surveillé. La défaillance ayant pour effet de stopper la circulation d'électricité, c'est préférentiellement lorsque le courant circule à nouveau dans le circuit électrique 1 contrôlé dans le bloc de restitution 13 que l'état de cette mémoire est vérifié et que, en fonction de son contenu, il peut être décidé d'activer un indicateur visuel ou sonore dont est pourvu l'appareil électrique aval 10 qui contient ce bloc de restitution 10.

Lorsque le traitement de la mesure est effectué après la transmission 102, et donc au niveau du bloc d'action 14, le signal transmis comprend préférentiellement un identifiant du bloc de restitution 13, ce qui permet au bloc d'action 14 d'assurer cette fonction de signalisation, puisque tant les mesures à analyser que l'appareil électrique aval 10 qui les émet sont connues. La signalisation peut se faire au niveau du bloc d'action 14, par exemple à l'aide d'un écran d'affichage ou autre, ou au niveau du bloc de restitution 13, à savoir du circuit électrique 1 alimenté, en aval.

Comme il a été décrit ci-dessus, la transmission du signal se fait préférentiellement en exploitant le principe des courants porteur en ligne. Un autre exemple de mode de transmission est détaillé ci-dessous, à savoir de communication en provoquant un déséquilibre par une fuite à la terre, voir la figure 5.

Ainsi, selon une caractéristique additionnelle possible, transmettre 102 se fait à l'aide d'un déséquilibre du circuit électrique 1, émettre 102' consistant alors essentiellement à provoquer un déséquilibre du circuit électrique 1 et recevoir 102" consistant alors essentiellement à détecter, voire à quantifier, un tel déséquilibre.

Ledit déséquilibre prend par exemple la forme d'un courant de fuite à la terre, créé par mise en communication électrique d'une des lignes du circuit électrique 1 et d'une ligne de terre, ce courant de fuite étant détecté à l'aide d'un tore dans lequel circulent les lignes électriques à l'exception de la ligne de terre et logé dans un disjoncteur différentiel formant le sectionneur 16 amont ou dans un autre composant. La détection peut se faire au niveau de la ligne de terre ou au niveau des lignes électriques.

Un déséquilibre du circuit électrique 1 correspond à la situation où le courant total fourni depuis l'amont au circuit électrique 1, sur la ligne de phase ou sur l'ensemble des lignes de phase, est différent du courant total que ce dernier renvoi vers l'amont, sur la ligne électrique de neutre. Un déséquilibre peut donc être créé en reliant électriquement à la ligne de terre, soit la ligne électrique de neutre, dans laquelle circule le courant total que le circuit électrique 1 renvoi vers l'amont, soit la ou une ligne de phase, où circule le courant total fourni depuis l'amont au circuit électrique 1. Alternativement, créer un déséquilibre peut aussi consister à réaliser, au niveau de la ligne de phase ou de l'une d'elles, une dérivation électrique de l'élément de mesure du courant total fourni depuis l'amont au circuit électrique 1, ou, au niveau de la ligne électrique de neutre, une dérivation de l'élément de mesure du courant total que le circuit électrique 1 renvoi vers l'amont, voire, au niveau de la ligne électrique 2 de neutre, de la ligne de phase ou de l'une d'elles, de l'élément comparant ces deux courants.

Créer un déséquilibre revient donc préférentiellement à créer une différence entre le courant total fourni par l'amont au circuit électrique 1 et le courant total que le circuit électrique 1 renvoi à l'amont. Ponctionner une partie du courant circulant dans le circuit électrique 1 et l'envoyer vers la ligne de terre permet notamment de créer ce déséquilibre, puisque ce courant n'est alors plus renvoyé vers l'amont. Le déséquilibre peut aussi être créé uniquement au niveau de l'élément de mesure, comme à l'aide des dérivations décrites ci-dessus.

Recevoir 102" est alors réalisé en détectant ce déséquilibre, par exemple en détectant directement le courant de fuite en surveillant la ligne électrique dans laquelle il est généré, par exemple par effet Hall ou en détectant une tension aux bornes d'une résistance électrique branchée sur la ligne de terre ou sur la dérivation du moyen de mesure décrite ci-dessus, ou encore en détectant directement une différence entre le courant total fourni par l'amont au circuit électrique 1 et le courant total que le circuit électrique 1 renvoi à l'amont, ce qui est réalisé dans un tore d'un disjoncteur 16 différentiel ou, de façon générale, dans un élément détectant un courant de fuite à la terre.

Selon une caractéristique additionnelle possible, provoquer l'ouverture 104 consiste essentiellement à provoquer l'ouverture des contacts électriques 15 d'un disjoncteur 16 différentiel qui forme le sectionneur, sensible à un déséquilibre du circuit électrique 1, notamment un déséquilibre par un courant de fuite, l'étape consistant essentiellement à recevoir 102" se faisant à l'aide du moyen de détection de déséquilibre du disjoncteur 16 différentiel, notamment un tore. Emettre 102' consiste alors à provoquer un déséquilibre à une fréquence ne créant pas de déclenchement du disjoncteur 16 différentiel, notamment comprise entre 5 kiloHertz et 2 mégaHertz, et préférentiellement entre 500 kiloHertz et 1,5 MégaHertz.

Provoquer l'ouverture 104 peut se faire en agissant mécaniquement sur la serrure du sectionneur 16 amont, de sorte à en forcer le déclenchement, en agissant mécaniquement sur la manette d'actionnement extérieur de la serrure du sectionneur 16, ou encore, lorsque la serrure utilise un effet magnétique comme pour un disjoncteur 16 de surcharge, en créant un champ magnétique qui créera le mouvement de la serrure.

Il est donc possible d'agir depuis l'extérieur du sectionneur 16, et donc sans le changer ni sans modifier sa mise en place ou connexion électrique, dès lors que l'on agit mécaniquement sur la manette d'actionnement externe de la serrure, ou magnétiquement, à travers le boîtier sur les éléments de la serrure. Dans ces cas là, la réception 102" est réalisée depuis un composant extérieur au sectionneur, et le sectionneur n'est pas nécessairement du type différentiel.

Il est aussi possible d'utiliser un disjoncteur 16 différentiel particulier, apte à recevoir 102" l'information transmise et à décider 103 de provoquer l'ouverture 104 de ses contacts, notamment de la même façon que lorsqu'il détecte lui-même un défaut différentiel, c'est-à-dire en actionnant la serrure depuis l'intérieur du disjoncteur 16 différentiel, comme dans les cas où il détecte, conformément à sa fonction, un déséquilibre durant suffisamment longtemps. Décider 103 peut se faire sur la base des données relevées pour le circuit électrique 1, comme un ampérage, en le comparant à une valeur de seuil représentative d'un danger ou d'une utilisation à moindre coût, dès lors que le tarif de l'électricité est disponible et peut être pris en compte. L'action peut aussi se faire grâce au bouton de test du sectionneur 16, en agissant sur lui ou en aval de la chaîne cinématique qui sépare ce bouton des contacts électriques 15.

L'information transmise 102 peut alors être codée de façon binaire en utilisant, pour les deux niveaux de codage, la présence ou l'absence d'un courant de fuite. Bien entendu, de façon alternative ou complémentaire, le déséquilibre peut aussi être traité analogiquement, et le niveau du courant de fuite peut alors être utilisé comme source d'information. Comme il a déjà été dit, le courant de fuite envoyé peut aussi être tel qu'il déclenche lui-même le disjoncteur 16 différentiel amont.

Pour éviter toutefois que le déséquilibre utilisé pour transmettre 102 provoque un déclenchement involontaire du disjoncteur 16 différentiel, en particulier si ce déséquilibre n'est qu'une source d'information et que décider 103 de provoquer l'ouverture 104 est donc réalisé après la transmission 102, il est nécessaire de mettre un terme à ce déséquilibre après un temps suffisamment court, et ce en tenant compte d'une éventuelle information devant être codée sous la forme d'un déséquilibre s'étendant sur plusieurs périodes. La période temporelle de base du codage dure donc suffisamment longtemps pour qu'un déséquilibre sur une seule période soit détecté comme unité de codage, mais est suffisamment courte pour qu'aucun déclenchement du disjoncteur 16 sélectif ne soit provoqué par un déséquilibre généré pendant quelques périodes, notamment 5 ou 8, préférentiellement pendant le nombre de périodes utilisé pour le codage.

Des techniques de brouillages peuvent être utilisées, si nécessaires, dès lors que le codage est tel qu'une information nécessitant un déséquilibre sur toutes les périodes dure trop longtemps et provoque un déclenchement. Le codage serait alors modifié conformément à une logique de brouillage pour éviter un déséquilibre durant trop longtemps, le code créé serait ensuite dûment interprété compte tenu de ladite logique.

Ainsi, avantageusement, la période temporelle de base du codage correspond à une fréquence comprise entre 5 kiloHertz et 2 MégaHertz, et préférentiellement entre 500 kiloHz et 1,5 MégaHz. En utilisant cette fréquence pour coder l'information par des déséquilibres du circuit électrique 1, un signal codé peut circuler sur les lignes du circuit électrique 1 sans pour autant provoquer le déclenchement d'un disjoncteur 16 différentiel classique. La fréquence de codage de l'information par des déséquilibres électriques est donc préférentiellement adaptée pour, d'une part, éviter un déclenchement d'un disjoncteur 16 différentiel classique sous l'effet de ces déséquilibres, et, d'autre part, permettre une détection de chaque déséquilibre. Le déclenchement du disjoncteur 16 différentiel se fait donc bien suite à l'étape de décision 103, sans aucune interférence provoquée par le déséquilibre utilisé pour la transmission 102.

Dans ces cas où la transmission se fait par des déséquilibres, comme il a déjà été décrit plus haut, le moyen d'émission 7 est apte à provoquer un déséquilibre du circuit électrique 1, en comprenant notamment un commutateur piloté reliant électriquement l'éventuelle ligne de terre à la ligne de neutre ou à l'une des lignes de phase, voire un commutateur piloté fermant une dérivation du disjoncteur 16 différentiel formant le sectionneur, le moyen de réception 8 étant apte à détecter, voire à quantifier, un tel déséquilibre, en comprenant notamment un tore dans lequel circulent les lignes électriques à l'exception de l'éventuelle ligne de terre et aménagé dans un disjoncteur 16 différentiel formant le sectionneur amont ou dans un autre composant agissant sur le sectionneur de sorte à en ouvrir les contacts électriques 15.

Le moyen de réception 8 peut être formé d'un tore détectant uniquement la différence entre le courant envoyé depuis l'amont et le courant envoyé depuis l'aval, ce tore pouvant être l'unique tore d'un disjoncteur 16 différentiel lui-même, comme dans la figure 5, ou encore un autre tore du même disjoncteur 16 différentiel, voire d'un bloc externe, rapporté, capable d'agir sur le disjoncteur 16 différentiel pour faire ouvrir les contacts 15.

Bien entendu, l'invention n'est pas limitée aux modes de réalisation décrits et représentés aux dessins annexés. Des modifications restent possibles, notamment du point de vue de la constitution des divers éléments, par combinaison différente de tout ou partie des caractéristiques susvisées, ou par substitution d'équivalents techniques, sans sortir pour autant du domaine de protection de l'invention.

## Revendications

1. Appareil électrique aval (10) dont l'alimentation d'énergie électrique est conditionnée par un appareil électrique amont (11), du type disjoncteur, disjoncteur différentiel ou sectionneur, ledit appareil électrique aval (10) comprenant des conducteurs (2', 2") pour la circulation d'électricité et des bornes pour leur connexion ainsi qu'au moins un bloc de restitution (13) comprenant
au moins un moyen de mesure (5), pour mesurer au moins une caractéristique de fonctionnement du circuit électrique (1) que forment lesdits conducteurs (2', 2")
au moins un moyen d'émission (7), pour émettre un signal représentatif du fonctionnement mesuré, à destination d'un moyen de réception (8) dudit signal, adapté audit moyen d'émission (7),
le au moins un moyen d'émission (7) émettant le signal sans câblage dédié à cette émission, **caractérisé en ce que**
le au moins un moyen d'émission (7) superpose au courant alternatif circulant dans les conducteurs (2', 2") un courant à plus haute fréquence et de plus faible énergie et **en ce que**
le au moins un moyen d'émission (7) consiste essentiellement en un commutateur, mettant en communication électrique la ligne de terre avec l'une des autres lignes du circuit électrique (1), neutre ou phase, afin de créer artificiellement un défaut de fuite à la terre, à une fréquence entre 5 kiloHertz et 2 mégaHertz.

2. Appareil électrique aval (10) selon la revendication 1, **caractérisé en ce que** le commutateur peut mettre en communication électrique la ligne de terre avec l'une des autres lignes du circuit électrique (1), neutre ou phase, afin de créer artificiellement un défaut de fuite à la terre, à une fréquence entre 500 kiloHertz et 1,5 mégaHertz.

3. Appareil électrique aval (10) selon l'une quelconque des revendications 1 ou 2, **caractérisé en ce que**
le au moins un moyen de mesure (5) consiste essentiellement en un voltmètre pour mesurer la tension entre deux conducteurs (2', 2").

4. Appareil électrique aval (10) selon l'une quelconque des revendications 1 à 3, **caractérisé en ce que** le bloc de restitution (13) comprend, en outre, un indicateur d'état, pour indiquer la survenue d'un défaut.

5. Appareil électrique aval (10) selon l'une quelconque des revendications 1 à 4, **caractérisé en ce que**
il prend la forme d'un socle de branchement terminal d'une installation électrique domestique, auquel différents types de consommateurs électriques peuvent être raccordés.

6. Appareil électrique amont (11) du type disjoncteur, disjoncteur différentiel ou sectionneur conditionnant l'alimentation d'énergie électrique d'un appareil électrique aval (10) selon l'une quelconque des revendications 1 à 5, ledit appareil électrique amont (11) étant apte à communiquer avec l'appareil électrique aval (10),
ledit appareil électrique amont (11) comprenant un bloc d'action (14) comprenant lui-même
un moyen de réception (8) de signal, pour recevoir un signal de la part du ou des moyen(s) d'émission (7) adapté(s),
un moyen de déclenchement (9) piloté, apte à provoquer l'ouverture de contacts électriques (15) d'un sectionneur (16) en vue de stopper une alimentation en électricité en aval desdits contacts, et ce sur la base du signal reçu par le moyen de réception (8),
**caractérisé en ce que**
le au moins un moyen de réception (8) reçoit le signal sans câblage dédié à cette réception.

7. Appareil électrique amont (11) selon la revendication 6, **caractérisé en ce que** le moyen de déclenchement (9) agit sur un sectionneur (16) existant, à côté duquel ledit appareil électrique amont (11) est monté.

8. Appareil électrique selon la revendication 7, **caractérisé en ce que** le moyen de déclenchement (9) est conçu pour agir sur la serrure d'un sectionneur (16) existant et à côté duquel il est placé, en traversant les parois qui les séparent.

9. Appareil électrique amont (11) selon la revendication 6, **caractérisé en ce que** le bloc d'action (14) comprend, en outre les contacts électriques (15) sur lesquels agit le moyen de déclenchement (9).

10. Equipement électrique, comprenant, d'une part, un appareil électrique aval (10) selon l'une quelconque des revendications 1 à 5, et, d'autre part, un appareil électrique amont (11) selon l'une quelconque des revendication 6 à 9, montés de sorte que le moyen de déclenchement (9) agit sur des contacts électriques (15) qui conditionnent la circulation d'énergie électrique dans les conducteurs (2', 2") de l'appareil électrique aval (10).

11. Equipement électrique selon la revendication 10, **caractérisé en ce que** le moyen de déclenchement (9) agit sur un disjoncteur de ligne dédié à la surveillance de la partie de l'installation électrique où se trouve l'appareil électrique aval (10).

12. Procédé de surveillance (100) d'un circuit électrique, pour la mise en oeuvre d'un équipement électrique selon la revendication 10 ou 11, comprenant des étapes consistant essentiellement à
mesurer (101) un paramètre représentatif du fonctionnement du circuit électrique (1) ;
décider (103) de la nécessité de stopper la circulation d'électricité dans le circuit électrique (1) en tenant compte des résultats de la mesure (101) ;
transmettre (102) un signal représentatif du fonctionnement du circuit (1), à savoir émettre (102'), en créant artificiellement, essentiellement à l'aide d'un commutateur mettant en communication électrique la ligne de terre avec l'une des autres lignes du circuit électrique (1), neutre ou phase,
un défaut de fuite à la terre, à une fréquence entre 5 kiloHertz et 2 mégaHertz, et recevoir (102") ledit signal ;
provoquer l'ouverture (104) des contacts électriques (15) d'un sectionneur (16) amont au circuit électrique (1),
procédé **caractérisé en ce que**
transmettre (102) se fait sans câblage dédié, mais se fait en particulier avec le câblage d'alimentation du circuit électrique (1) lui-même.

13. Procédé selon la revendication 12, **caractérisé en ce que**
mesurer (101) un paramètre représentatif consiste essentiellement à mesurer la tension entre deux conducteurs (2', 2") du circuit électrique (1),
l'interruption de l'alimentation électrique du circuit électrique (1) étant décidée dès lors qu'une baisse régulière de la tension est observée au-delà d'une période de temps prédéfinie.

14. Procédé selon l'une quelconque des revendications 12 ou 13, **caractérisé en ce que**
l'étape de décision (103) de l'ouverture se fait avant l'étape d'émission (102') du signal, de sorte que le signal émis contient une instruction d'ouverture des contacts électriques (15).

15. Procédé selon l'une quelconque des revendications 12 à 14, **caractérisé en ce que**
il comprend une étape consistant essentiellement à signaler le circuit électrique (1) à l'origine du déclenchement.

## Patentansprüche

1. Nachgeschaltetes Elektrogerät (10), dessen Stromversorgung von einem vorgeschalteten Elektrogerät (11) des Typs Schutzschalter, Differenzstromschutzschalter oder Trennschalter abhängt, wobei das nachgeschaltete Elektrogerät (10) Leiter (2', 2") für den Stromfluss und Klemmen für ihren Anschluss umfasst, sowie mindestens einen Wiedergabeblock (13) umfassend,
mindestens ein Messmittel (5) zum Messen mindestens eines Betriebsmerkmals des Stromkreises (1), den die Leiter (2', 2") bilden, mindestens ein Sendemittel (7), um ein Signal, das für den gemessenen Betrieb repräsentativ ist, zu einem Empfangsmittel (8) des Signals, das an das Sendemittel (7) angepasst ist, zu senden,
wobei das mindestens eine Sendemittel (7) das Signal ohne Verkabelung, die für dieses Senden dediziert ist, sendet, **dadurch gekennzeichnet, dass** das mindestens eine Sendemittel (7) dem Wechselstrom, der in den Leitern (2', 2") strömt, einen Strom mit höherer Frequenz und niedrigerer Energie überlagert, und dass das mindestens eine Sendemittel (7) im Wesentlichen aus einem Schalter besteht, der die Erdungsleitung mit einer der anderen Leitungen des Stromkreises (1), Nullleiter oder Phase, in Kommunikation setzt, um künstlich einen Leckfehler zur Erdung mit einer Frequenz zwischen 5 kHz und 2 MHz zu schaffen.

2. Nachgeschaltetes Elektrogerät (10) nach Anspruch 1, **dadurch gekennzeichnet, dass** der Schalter die Erdungsleitung mit einer der anderen Leitungen des Stromkreises (1), Nullleiter oder Phase, in Kommunikation setzen kann, um künstlich einen Leckfehler zur Erdung mit einer Frequenz zwischen 500 kHz und 1,5 MHz zu schaffen.

3. Nachgeschaltetes Elektrogerät (10) nach einem der Ansprüche 1 oder 2, **dadurch gekennzeichnet, dass**
das mindestens eine Messmittel (5) im Wesentlichen aus einem Voltmeter zum Messen der Spannung zwischen zwei Leitern (2', 2") besteht.

4. Nachgeschaltetes Elektrogerät (10) nach einem der Ansprüche 1 bis 3, **dadurch gekennzeichnet, dass** der Wiedergabeblock (13) ferner eine Anzeigevorrichtung umfasst, um das Auftreten eines Fehlers anzugeben.

5. Nachgeschaltetes Elektrogerät (10) nach einem der Ansprüche 1 bis 4, **dadurch gekennzeichnet, dass**
es die Form eines Endanschlusssockels einer Haushaltselektroanlage hat, an den unterschiedliche Typen von Stromverbrauchern angeschlossen werden können.

6. Vorgeschaltetes Elektrogerät (11) des Typs Schutzschalter, Differenzstromschutzschalter oder Trennschalter, von dem die Stromversorgung eines nachgeschalteten Elektrogeräts (10) nach einem der Ansprüche 1 bis 5 abhängt, wobei das vorgeschaltete Elektrogerät (11) geeignet ist, mit dem nachgeschalteten Elektrogerät (10) zu kommunizieren, wobei das vorgeschaltete Elektrogerät (11) einen Aktionsblock (14) umfasst, selbst umfassend
ein Signalempfangsmittel (8), um ein Signal von dem oder den angepassten Sendemittel(n) (7) zu empfangen,
ein gesteuertes Auslösemittel (9), das geeignet ist, das Öffnen elektrischer Kontakte (15) eines Trennschalters (16) zu verursachen, um eine nachgeschaltete Stromversorgung der Kontakte zu stoppen, und dies basierend auf dem Signal, das von dem Empfangsmittel (8) empfangen wird,
**dadurch gekennzeichnet, dass**
das mindestens eine Empfangsmittel (8) das Signal ohne Verkabelung, die für diesen Empfang dediziert ist, empfängt.

7. Vorgeschaltetes Elektrogerät (11) nach Anspruch 6, **dadurch gekennzeichnet, dass** das Auslösemittel (9) auf einen existierenden Trennschalter (16) einwirkt, neben dem das stromaufwärtige Elektrogerät (11) installiert ist.

8. Elektrogerät nach Anspruch 7, **dadurch gekennzeichnet, dass** das Auslösemittel (9) konzipiert ist, um auf das Schloss eines existierenden Trennschalters (16), neben dem es platziert ist, einzuwirken, wobei die Wandungen, die sie trennen, durchquert werden.

9. Vorgeschaltetes Elektrogerät (11) nach Anspruch 6, **dadurch gekennzeichnet, dass** der Aktionsblock (14) außerdem die elektrischen Kontakte (15) umfasst, auf die das Auslösemittel (9) einwirkt.

10. Elektroausstattung, die einerseits ein nachgeschaltetes Elektrogerät (10) nach einem der Ansprüche 1 bis 5 umfasst, und, andererseits, ein vorgeschaltetes Elektrogerät (11) nach einem der Ansprüche 6 bis 9, die derart montiert sind, dass das Auslösemittel (9) auf elektrische Kontakte (15) einwirkt, von welchen Stromfluss in den Leitern (2', 2") des nachgeschalteten Elektrogeräts (10) abhängt.

11. Elektroausstattung nach Anspruch 10, **dadurch gekennzeichnet, dass** das Auslösemittel (9) auf einen Leitungsschutzschalter einwirkt, der der Überwachung des Teils der Elektroanlage, in dem sich das nachgeschaltete Elektrogerät (10) befindet, dediziert ist.

12. Überwachungsverfahren (100) eines Stromkreislaufs zur Umsetzung einer Elektroausstattung nach Anspruch 10 oder 11, das die Schritte umfasst, die im Wesentlichen aus Folgendem bestehen
Messen (101) eines Parameters, der für den Betrieb des Stromkreises (1) repräsentativ ist,
Bestimmen (103) der Notwendigkeit, den Stromfluss in dem Stromkreis (1) unter Berücksichtigung der Resultate der Messung (101) zu stoppen, Übertragen (102) eines Signals, das für den Betrieb des Stromkreises (1) repräsentativ ist, nämlich Senden (102'), indem künstlich, im Wesentlichen mit Hilfe eines Schalters, der die Erdungsleitung mit einer der anderen Leitungen des Stromkreises (1), Nullleiter oder Phase, in elektrische Kommunikation setzt, ein Leckfehler zur Erdung mit einer Frequenz zwischen 5 kHz und 2 MHz geschaffen wird, und Empfangen (102") des Signals,
Verursachen des Öffnens (104) der elektrischen Kontakte (15) eines vorgeschalteten Trennschalters (16) des Stromkreises (1),
das Verfahren **dadurch gekennzeichnet, dass**
das Übertragen (102) ohne dedizierte Verkabelung aber insbesondere mit der Versorgungsverkabelung des Stromkreises (1) selbst erfolgt.

13. Verfahren nach Anspruch 12, **dadurch gekennzeichnet, dass** das Messen (101) eines repräsentativen Parameters im Wesentlichen darin besteht, die Spannung zwischen zwei Leitern (2', 2") des Stromkreises (1) zu messen,
wobei das Unterbrechen der Stromversorgung des Stromkreises (1) bestimmt wird, sobald ein regelmäßiges Sinken der Spannung über eine vordefinierte Zeitspanne beobachtet wird.

14. Verfahren nach einem der Ansprüche 12 oder 13, **dadurch gekennzeichnet, dass**
der Entscheidungsschritt (103) des Öffnens vor dem Sendeschritt (102') des Signals derart erfolgt, dass das gesendete Signal eine Anweisung zum Öffnen der elektrischen Kontakte (15) enthält.

15. Verfahren nach einem der Ansprüche 12 bis 14, **dadurch gekennzeichnet, dass** es einen Schritt umfasst, der im Wesentlichen darin besteht, den Stromkreis (1), der der Ursprung der Auslösung ist, zu signalisieren.

## Claims

1. Downstream electrical device (10) the electrical power of which is supplied by an upstream electrical device (11) of the circuit breaker type, differential or disconnect switch circuit breaker, said downstream electrical device (10) comprising conductors (2', 2") for the circulation of electricity and terminals for their connection as well as at least one restitution block (13) comprising
at least one measurement unit (5), for measuring at least one feature of the functioning of the electric circuit (1) that said conductors (2', 2") form,
at least one emitting unit (7), for emitting a signal representative of the measured function to a reception unit (8) of said signal, adapted to said emitting unit (7),
the at least one emitting unit (7) emitting the signal without wiring dedicated to said emission, **characterised in that**
the at least one emitting unit (7) superimposes on the alternating current circulating in the conductors (2', 2") a current of higher frequency and lower energy and **in that**
the at least one emitting unit (7) consists essentially of a switch, putting the earth line into electrical communication with one of the other lines of the electrical circuit (10), neutral or phase, in order to create artificially a earthing fault, at a frequency of between 5 kilohertz and 2 megahertz.

2. Downstream electrical device (10) according to claim 1, **characterised in that** the switch can put the earth line into electrical communication with one of the other lines of the electric circuit (1), neutral or phase, in order to create artificially an earthing fault, at a frequency between 500 kilohertz and 1.5 megahertz.

3. Downstream electrical device (10) according to any one of claims 1 or 2, **characterised in that** the at least one measurement unit (5) consists essentially of a voltmeter for measuring the voltage between two conductors (2', 2").

4. Downstream electrical device (10) according to any one of claims 1 to 3, **characterised in that** the restitution block (13) also comprises a status indicator, for indicating the occurrence of a fault.

5. Downstream electrical device (10) according to any one of claims 1 to 4, **characterised in that** it takes the form of a terminal connecting base of a domestic electrical installation, to which different types of electrical consumer units can be attached.

6. Upstream electrical device (11) of the circuit breaker type, differential or disconnect switch circuit breaker, providing the supply of electrical power to a downstream electrical device (10) according to any one of claims 1 to 5, said upstream electrical device (11) being able to communicate with the downstream electrical device (10),
said upstream electrical device (11) comprising an action block (14) itself comprising:
a signal reception unit (8), for receiving a signal from the adapted emitting unit(s) (7),
a driven actuation unit (9), capable of causing the opening of electrical contacts (15) of a disconnect switch (16) with the view to stopping the supply of electricity downstream of said contacts, and on the basis of the signal received by the reception unit (8),
**characterised in that**
the at least one reception unit (8) receives the signal without dedicated wiring for this reception.

7. Upstream electrical device (11) according to claim 6, **characterised in that** the actuation unit (9) acts on an existing disconnect switch (16) next to which said upstream electrical device (11) is mounted.

8. Electrical device according to claim 7, **characterised in that** the actuation unit (9) is designed to act on the lock of an existing disconnect switch (16) and next to which it is placed, traversing the walls which separate them.

9. Upstream electrical device (11) according to claim 6, **characterised in that** the activation block (14) comprises in addition electrical contacts (15) on which the actuation unit (9) acts.

10. Electrical equipment comprising on the one hand a downstream electrical device (10) according to any one of claims 1 to 5, and on the other hand an upstream electrical device (11) according to any one of claims 6 to 9, mounted such that the actuation unit (9) acts on the electrical contacts (15) which cause the circulation of electrical power in the conductors (2', 2") of the downstream electrical device (10).

11. Electrical equipment according to claim 10, **characterised in that** the actuation unit (9) acts on a circuit breaker dedicated to monitoring the part of the electrical installation where the downstream electrical device (10) is located.

12. Method of monitoring (100) an electric circuit, for the implementation of a piece of electric equipment according to claim 10 or 11, comprising the steps consisting essentially of
measuring (101) a parameter representative of the function of the electric circuit (1);
determining (103) the need to stop the circulation of electricity in the electric circuit (1) taking into account the results of the measurement (101);
transmitting (102) a signal representative of the functioning of the circuit (1), namely emitting (102') by creating artificially, essentially by means of a switch which electrically connects the earth line to one of the other lines of the electric circuit (1), neutral or phase, an earthing fault, at a frequency of between 5 kilohertz and 2 megahertz and receiving (102") said signal;
triggering the opening (104) of the electrical contacts (15) of a disconnect switch (16) upstream of the electric circuit (1),
said method being **characterised in that**
the transmission (102) is performed without dedicated wiring, but is performed in particular via the feed wiring of the electric circuit (1) itself.

13. Method according to claim 12, **characterised in that** measuring (101) a representative parameter consists essentially of measuring the voltage between two conductors (2', 2") of the electric circuit (1),
the interruption of the electric supply of the electric circuit (1) being decided when a regular decrease of the voltage is observed beyond a predefined period of time.

14. Method according to any one of claims 12 or 13, **characterised in that** the opening decision step (103) is performed before the step of emitting (102') the signal, such that the emitted signal contains an instruction to open the electric contacts (15).

15. Method according to any one of claims 12 to 14, **characterised in that** it comprises a step consisting essentially of signalling the electric circuit (1) at the origin of the trigger.
